# EUROPEAN PATENT APPLICATION

(11) **EP 4 822 342 A1**
(43) Date of publication of application: **14.10.2026**
(21) Application number: 24899737.1
(22) Date of filing: 29.11.2024
(51) Int. Cl.: G01N 23/04, G06V 10/774

(54) **MEAT COMPOSITION CALCULATION METHOD AND SYSTEM**

(30) Priority: 05.12.2023 CN 202311651948
(71) Applicant: NUCTECH COMPANY LIMITED, Beijing 100084 (CN); Tsinghua University, Haidian District, Beijing 100084 (CN)
(72) Inventor: ZHANG, Li, Beijing 100084 (CN); SUN, Yunda, Beijing 100084 (CN); FU, Gang, Beijing 100084 (CN); LIU, Jingjing, Beijing 100084 (CN); WANG, Qiang, Beijing 100084 (CN); ZHANG, Xiaomin, Beijing 100084 (CN); WU, Shanshan, Beijing 100084 (CN)
(74) Representative: Gunzelmann, Rainer
(86) International application number: PCT/CN2024/135632
(87) International publication number: WO 2025/119097

(57) **Abstract**

A meat composition calculation method. The method comprises: executing dual-energy X-ray scanning on a meat piece, so as to obtain scanned image data of the meat piece; converting the expression form of the scanned image data, so as to obtain image conversion data of the meat piece; training a meat composition calculation model on the basis of a plurality of meat samples, so as to obtain a trained meat composition calculation model; and on the basis of the image conversion data, using the trained meat composition calculation model to calculate meat composition information of the meat piece.

## Description

### CROSS-REFERENCE TO RELATED APPLICATIONS

The present disclosure claims the priority of China Patent Application No.202311651948.9 filed on December 5, 2023, the entire contents of which are incorporated into the present disclosure by reference.

### TECHNICAL FIELD

The present disclosure relates to the technical field of detection. In particular, it relates to a method and a system for calculating meat composition, in particular to a method and a system for calculating meat composition based on dual-energy X-ray scanning.

### BACKGROUND

In the breeding industry, such as pig, sheep, cattle and other breeding industries, the meat composition of breeding individuals obtained is a valuable feedback information. This can be used to guide individual selling price, individual breeding value-added methods and so on. Meat composition analysis is used to obtain the weight and/or percentage of local or whole muscle, fat and bone. Dual-energy X-ray scanning imaging is a non-invasive method, which has emerged in some meat composition analysis and research, and achieved better results.

The current dual-energy X-ray-based method for calculating meat composition mainly relies on calibration parts made of either the real meat/bone slices with known components or the meat/bone slices made of polymer materials, and scanning these calibration parts to establish the corresponding lookup table. This method is relatively straightforward, but the difficulty lies in making the calibration parts that meet the requirements, particularly because the real meat/bone slices are difficult to preserve.

### SUMMARY

According to an aspect of the present disclosure, there is provided a method for calculating meat composition, comprising: performing dual-energy X-ray scanning on a meat piece to obtain scanned image data of the meat piece; converting an expression form of the scanned image data to obtain image conversion data of the meat piece; training a meat composition calculation model based on a plurality of meat samples to obtain a trained meat composition calculation model; and calculating, based on the image conversion data, meat composition information of the meat piece using the trained meat composition calculation model.

In an embodiment, the method further comprises converting the scanned image data of the meat piece into one or more expression forms to obtain one or more image conversion data of the meat piece corresponding to the one or more expression forms.

In an embodiment, the expression forms comprise a dual-energy form, a gray-scale form, an RGB form, an atomic number form and various base material forms.

In an embodiment, the method further comprises calibrating the scanned image data of the meat piece or the image conversion data of the meat piece to unify the scanned image data or the image conversion data under an imaging standard corresponding to the trained meat composition calculation model.

In an embodiment, the method further comprises performing image processing on the scanned image data of the meat piece to separate at least one area to be detected from the scanned image data of the meat piece; and inputting image conversion data of the meat piece corresponding to the at least one area to be detected into the trained meat composition calculation model to calculate meat composition information of the at least one area to be detected.

In an embodiment, the training comprises: performing the dual-energy X-ray scanning on the meat sample to obtain scanned image data of the meat sample, and converting an expression form of the scanned image data of the meat samples to obtain image conversion data of the meat sample; carrying out a high-precision measurement on the meat samples to obtain true values of the meat composition of the meat samples; and training the meat composition calculation model based on the image conversion data of the meat sample and the true values of the meat composition to obtain the trained meat composition calculation model.

In an embodiment, the training further comprises calibrating the scanned image data of the plurality of meat samples or the image conversion data of the meat samples to unify the scanned image data or the image conversion data under a reference imaging standard.

In an embodiment, the training further comprises converting the scanned image data of the meat samples into one or more expression forms to obtain image conversion data of one or more meat samples corresponding to the one or more expression forms; and obtaining a plurality of trained meat composition calculation models based on image conversion data of the plurality of meat samples.

In an embodiment, the training further comprises: for each of the plurality of meat samples, establishing a mapping relationship between the scanned image data of each meat sample and a true value of meat composition; and training the meat composition calculation model by calculating a difference between a calculation value of the meat composition and the true value of the meat composition of a same meat sample based on the mapping relationship of the plurality of meat samples, and updating model parameters of the meat composition calculation model based on the difference.

In an embodiment, the carrying out the high-precision measurement comprises: obtaining the true values of the meat composition of the meat samples by using a high-precision imaging device; and/or measuring by cutting the meat sample manually to obtain the true values of the meat composition of the meat samples.

In an embodiment, the true value of the meat composition comprises at least one of muscle weight, fat weight, bone weight, total weight, muscle weight percentage, fat weight percentage or bone weight percentage of the meat samples.

The calculated meat composition information comprises at least one of muscle weight, fat weight, bone weight, total weight, muscle weight percentage, fat weight percentage or bone weight percentage; and the method further comprises: performing output processing on the calculated meat composition information to output at least one of muscle weight, fat weight, bone weight, total weight, muscle weight percentage, fat weight percentage or bone weight percentage to the outside.

According to another aspect of the present disclosure, there is provided a system for calculating meat composition which implements the method for calculating meat composition of this disclosure, and the system comprises an image scanning module configured to perform dual-energy X-ray scanning on a meat piece or a meat samples to obtain scanned image data of the meat piece or the meat samples; a conversion module configured to convert an expression form of the scanned image data to obtain image conversion data of the meat piece or the meat samples; a true value obtaining module configured to perform a high-precision measurement on the meat sample to obtain true values of the meat composition of the meat samples; and a meat composition calculation model, which is trained based on image conversion data of a plurality of meat samples and the true values of the meat composition to obtain a trained meat composition calculation model, the trained meat composition calculation model being used to calculate meat composition information of the meat piece based on the image conversion data of the meat piece.

In an embodiment, the system further comprises a calibration module configured to calibrate the scanned image data or the image conversion data to unify the scanned image data or the image conversion data under a reference imaging standard.

In an embodiment, the system further comprises an image separating module configured to perform image processing on the scanned image data of the meat piece to separate at least one area to be detected from the scanned image data of the meat piece, to facilitate the system to obtain image conversion data of the meat piece corresponding to the at least one area to be detected.

In an embodiment, the system further comprises a mapping establishing module configured to establish a mapping relationship between the scanned image data of the meat sample and the true value of the meat composition for each of the meat samples.

In an embodiment, the system further comprises an output processing module configured to perform output processing on the calculated meat composition information to output at least one of muscle weight, fat weight, bone weight, total weight, muscle weight percentage, fat weight percentage or bone weight percentage to the outside.

It should be understood that what is described in this portion is not intended to identify key or important features of the embodiments of this disclosure, nor is it intended to limit the scope of the disclosure. Other features of the present disclosure will be readily understood from the following description.

### BRIEF DESCRIPTION OF THE DRAWINGS

The accompanying drawings are used for a better understanding of the solution and do not constitute a limitation of this disclosure, in which:
Fig. 1 shows a flowchart of a method for calculating meat composition according to an embodiment of the present disclosure.
Fig. 2 shows a flowchart of a method for training a meat composition calculation model according to an embodiment of the present disclosure.
Fig. 3 shows an example of a flowchart of training a meat composition calculation model according to an embodiment of the present disclosure.
Fig. 4 shows an example of a system for calculating meat composition according to an embodiment of the present disclosure.

### DETAILED DESCRIPTION

In order to more clearly explain the purpose, technical solution and advantages of the present disclosure, embodiments of the present disclosure will be described in detail with reference to the accompanying drawings. It should be understood that the following description of the embodiments is intended to explain and illustrate the general concept of the present disclosure, and should not be construed as limiting the present disclosure. In the specification and drawings, the same or similar reference numerals refer to the same or similar parts or components. For the sake of clarity, the drawings are not necessarily drawn to scale, and some well-known components and structures may be omitted from the drawings.

Unless otherwise defined, technical terms or scientific terms used in this disclosure shall have their ordinary meanings as understood by people with ordinary skills in the field to which this disclosure belongs. The terms "first", "second" and the like used in this disclosure do not indicate any order, quantity or importance, but are only used to distinguish different components. The word "a" or "an" does not exclude a plurality. Similar words such as "including" or "comprising" mean that the elements or objects appearing before the word cover the elements or objects listed after the word and their equivalents, without excluding other elements or objects. Similar words such as "connected" or "connection" are not limited to physical or mechanical connection, but can include electrical connection, whether direct or indirect. "Up", "Down", "Left", "Right", "Top" or "Bottom" and so on are only used to express the relative positional relationship. When the absolute position of the described object changes, the relative positional relationship may also change accordingly. When an element, such as a layer, film, region or substrate, is said to be "above" or "below" another element, the element may be "directly above" or "below" another element, or intervening elements may be present.

The present disclosure provides a method and a system for calculating meat composition. In this method, meat composition information is obtained by using a deep learning trained meat composition calculation model, thus avoiding the production of meat slice/bone slice calibration pieces in the traditional way, and improving information accuracy and economic benefits.

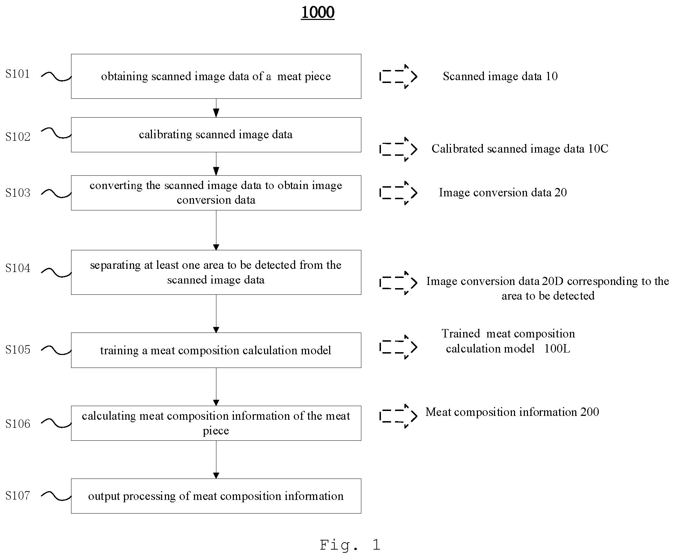

Fig. 1 shows a flowchart of a method 1000 for calculating meat composition according to an embodiment of the present disclosure.

As shown in Fig. 1, at step S101, a dual-energy X-ray imaging device can be used to perform dual-energy X-ray scanning on a meat piece(a piece of meat) to be detected to obtain scanned image data 10 of the meat piece. According to the embodiment of the present disclosure, the " piece of meat" herein can be, for example, a piece of pork, a piece of beef, a piece of mutton, etc., and the meat piece can refer to the whole meat or part of the meat (for example, a front leg, a hind leg, etc.) according to actual needs. As an example, the scanned image data 10 may be twodimensional imaging data.

At step S102, the obtained scanned image data 10 of the meat piece can be calibrated to unify the scanned image data under the reference imaging standard. In this context, "reference imaging standard" can refer to an imaging standard specified according to the imaging standard of one or more dual-energy X-ray imaging devices being used, so that the obtained scanned image data can be calibrated according to the specified imaging standard, thereby unifying the scanned image data under the imaging standard of a single device. And thus the inaccuracy of calculation results that may be caused by the difference of imaging standards among multiple devices can be eliminated. As an example, the reference imaging standard may be an imaging standard used by one of multiple dual-energy X-ray imaging devices. Or as another example, in the case that only one dual-energy X-ray imaging device is used for detection, and higher accuracy of results is required, the reference imaging standard may be a preset imaging standard. However, embodiments of the present disclosure are not limited thereto.

Here, the reference imaging standard may be an imaging standard corresponding to a trained meat composition calculation model(to be described below). That is, since the scanned image data 10 needs to be applied to the trained meat composition calculation model 100L to calculate the meat composition information 200 in the subsequent process, the trained meat composition calculation model 100L and the scanned image data 10 should be based on the same imaging standard. In other words, the trained meat composition calculation model 100L may have been trained based on the scanned image data under one imaging standard, so the trained meat composition calculation model 100L will have higher calculation accuracy for the scanned image data under this imaging standard. In this case, by calibrating the scanned image data 10 obtained from step S101 to the imaging standard corresponding to the trained meat composition calculation model 100L to obtain the calibrated scanned image data 10C, the calibrated scanned image data 10C can be better matched with the trained meat composition calculation model 100L, thus ensuring the calculation accuracy and reliability.

As an example, calibrating the scanned image data 10 may comprise calculating the difference between the scanned image data of each dual-energy X-ray imaging device and the scanned image data under the reference imaging standard with the same parameter settings, and recording the difference as a compensation. Furthermore, compensations may be calculated and recorded for a plurality of different parameter setting schemes, with each corresponding to its respective dual-energy X-ray imaging device, so as to form a compensation mapping table or a compensation trend curve. Therefore, the calibration of the scanned image data 10 can be realized according to the compensation corresponding to the parameter setting scheme used. However, this is only an example, and embodiments of the present disclosure are not limited thereto. The present disclosure may encompass other suitable calibration methods, provided that the calibrated scanned image data 10C can be under the same imaging standard as the trained meat composition calculation model 100L to be used.

It should be noted that the method 1000 for calculating meat composition according to the embodiment of the present disclosure may not comprise step S102. That is, step S102 is an optional step. For example, in a case where high accuracy of meat composition calculation is not demanded, the calibration step can be omitted. Such decisions can be made on a case-by-case basis according to the specific use and requirements.

Alternatively, as another example, step S102 may be performed after step S103. That is, after the conversion step, the calibration process described above can be performed on the converted image conversion data 20, so as to unify the image conversion data under the reference imaging standard.

At step S103, the expression of the calibrated scanned image data 10C is converted to obtain image conversion data 20. As an example, the image conversion data 20 may be dual-energy format data, gray scale format data, RGB format data, atomic number format data or various base material format data, and so on. In this context, "dual-energy form data" can be low-energy and high-energy data obtained by a dual-energy X-ray detection system, which reflects the attenuation of the detected object under different ray energies. "Gray form data" can be converted from dual-energy data, which is a comprehensive expression of attenuation under different ray energies. "Atomic number formal data" is also calculated based on dual-energy data, indicating the equivalent atomic number of each part of the current detection object. "RGB format data" is the result of applying pseudo-color coloring processing by combining gray format data and atomic number format data. " base material format data" is the decomposition coefficient of base material obtained from dual-energy data based on preset base material information.

In an embodiment, the calibrated scanned image data 10C can be converted into one of dual-energy format data, gray format data, RGB format data, atomic number format data and various base material format data as the image conversion data 20. In this way, by transforming the expression forms of scanned image data and giving a variety of expression forms to choose from, scanned image data can have a variety of different expression types, increasing data diversity. For distinct meat pieces with different types of calculation characteristics, the accuracy and fitting degree of scanned image data with different expressions may be different. Therefore, when there are multiple expression forms are available, one or more expression forms can be selected for conversion according to actual needs (for example, according to the type and position characteristics of meat pieces), so as to improve the calculation accuracy and make the method 1000 for calculating meat composition flexible to adapt and adjust according to the characteristics of meat pieces.

Alternatively, the transformed expression form can also be selected according to the trained meat composition calculation model 100L. For example, the meat composition calculation model 100 can be trained separately for each data expression form (for example, dual-energy form, gray scale form, RGB form, atomic number form and various base material forms) to obtain a plurality of trained models for calculating meat composition 100L respectively corresponding to each data expression form. After the verification, the trained meat composition calculation model 100L respectively with the best calculation performance can be determined as the model to be used, and the data expression form corresponding to the model can be determined. In this case, the calibrated scanned image data 10C can be converted into the determined data expression form.

In another embodiment, the calibrated scanned image data 10C can be converted into various expression forms. In this case, a variety of image conversion data 20 can be obtained. As an example, the various image conversion data 20 may comprise at least two of dual-energy format data, gray format data, RGB format data, atomic number format data or various base material format data. In this way, on the one hand, different information of meat composition can be calculated based on different expression forms. That is, the calculation of meat composition information can be performed for the same meat piece for many times in different data forms, so that multiple calculation results can be obtained. Thus, for example, these multiple calculation results can be averaged to obtain the final meat composition information, so as to ensure the accuracy and reliability of calculation. On the other hand, in a case where the meat piece to be detected is a whole meat sample, the subsequent process may involve separate calculations for a plurality of local areas in the whole sample, and as mentioned above, the data expression forms applicable to different areas may be different. therefore, by converting into a plurality of different expression forms, appropriate data expression forms can be selected for different local areas for calculation, thus speeding up the calculation process and improving the calculation accuracy.

At step S104, image processing may be performed on the calibrated scanned image data 10C of the meat piece to separate at least one area to be detected from the calibrated scanned image data 10C, and obtain image conversion data 20D corresponding to the separated area to be detected.

In a case where the meat piece is the whole meat (for example, the whole pork carcass), the calibrated scanned image data 10C of the meat piece obtained is also the scanned image data about the whole meat. However, in actual meat composition detection, what is needed may be the meat composition information of local areas of meat. Taking pork as an example, it may be necessary to separately detect the meat composition information of local parts such as pig's front legs, pig's hind legs, pig's head and pig's buttocks. In this case, the required local area can be separated from the scanned image data of the meat piece as a whole, that is, the area to be detected can be separated. Then, according to the separated areas to be detected, the image conversion data 20D corresponding to these areas are extracted from the image conversion data 20 to be used as the input of the meat composition calculation model in the subsequent process, so that the meat composition information can be calculated for each local area of the meat.

In an embodiment, automatic image processing of image data can be performed by using image segmentation and positioning technology, and optionally combining image denoising technology and image enhancement technology. As an example, the image data can be first subjected to a preliminary sharpening process by using an image denoising method and an image enhancement method. Then, a plurality of feature points are extracted from the target area of the image data according to the preset feature point extraction information by using the image segmentation and positioning method, so that the area to be detected is divided along the extracted feature points. And the area to be detected 20D of the image conversion data 20 can be obtained by using this area as a mask. As an example, the feature point extraction information of the corresponding part can be set according to the geometric structure information of the part to be divided of the meat piece. In addition, the set feature point extraction information can be input into the relevant image processing software in advance for retrieval and use when performing image processing. The image data described in this embodiment may be scanned image data 10, calibrated scanned image data 10C or image conversion data 20.

In another embodiment, the image processing of the image conversion data 20 can be performed using an image segmentation and positioning model. As an example, the image segmentation and positioning model can be trained by using the image conversion data of multiple samples, so that the trained image segmentation and positioning model can accurately segment the image according to the input image conversion data, thus separating the required area. In this embodiment, at step S104, the image conversion data 20, scanned image data 10 or calibrated scanned image data 10C of a meat piece can be input into a trained image segmentation and positioning model to output an image segmentation result (i.e., at least one area to be detected) from the model, and thus image conversion data 20D corresponding to the area to be detected can be extracted.

It should be noted that step 104 is an optional step. That is, step S104 may be omitted. For example, when the meat composition information is not calculated for the local part of meat, or when the image conversion data 20 itself is about the local part to be detected, it is more appropriate to use all the image conversion data 20 as the input of the model without dividing the image conversion data 20 to extract some data. In this case, it is not necessary to perform step S104, so step S104 can be omitted.

In addition, it should be noted that step S104 may be performed between S101 and S102, or between S102 and S103, or between S103 and S105. This arrangement demonstrates procedural configurability based on practical considerations during implementation.

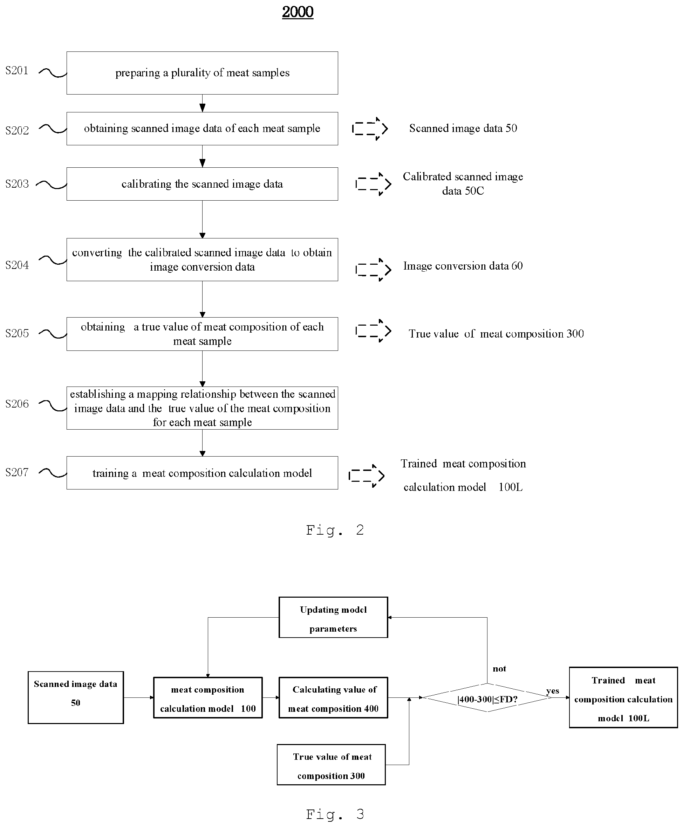

At step S105, the meat composition calculation model 100 may be trained based on a plurality of meat samples to obtain a trained meat composition calculation model 100L. The training method of the meat composition calculation model 100 will be described in detail below with reference to Fig. 2.

At step S106, the meat composition information 200 of the meat piece can be calculated using the trained meat composition calculation model 100L based on the image conversion data 20D. As an example, the image conversion data 20D as input may be fed into the trained meat composition calculation model 100L, so that the trained meat composition calculation model 100L can process the image conversion data 20D, thereby calculating the meat composition information 200 of the meat piece to be detected.

According to an embodiment of the present disclosure, "meat composition" may refer to a muscle component, a fat component and a bone component in a meat piece. As an example, the meat composition information 200 may comprise at least one of muscle weight, fat weight, bone weight, total weight, muscle weight percentage, fat weight percentage or bone weight percentage.

At step S107, output processing can be performed on the calculated meat composition information 200. As an example, "output processing" may involve calculating and converting of the meat composition information 200, and outputting the result in the form of the meat composition representation required by the user, so as to facilitate comparison, quantification and grading by the user. For example, the output processing may comprise conversion into muscle proportion information (i.e., muscle weight percentage), fat proportion information (i.e., fat percentage) and bone proportion information (i.e., bone weight percentage) according to the information of muscle weight, fat weight, bone weight and total weight. Therefore, after the output processing, at least one of muscle weight, fat weight, bone weight, total weight, muscle weight percentage, fat weight percentage or bone weight percentage can be output to the outside. As another example, "output processing" may refer to format conversion of the meat composition information 200, so that the meat composition information can be in a suitable format for receiving, displaying and analyzing, etc. by an external device.

Fig. 2 shows a flowchart of a method 2000 of training the meat composition calculation model 100 according to an embodiment of the present disclosure.

At step S201, a plurality of meat samples are obtained, so that model training can be performed based on the obtained plurality of meat samples. In this context, "meat sample" can refer to the whole meat or meat parts (such as front legs, hind legs, etc.). In one embodiment, in the training of the model, there may be no requirement for meat samples. That is, various types of samples can be selected as meat samples for training, including, for example, whole meat samples and local meat samples of various parts. In another embodiment, in a case where there are high requirements for the calculation results, meat samples can be obtained from a certain part. As an example, if it is desired to obtain a meat composition calculation model of pig front legs, a plurality of pig front leg samples can be obtained for training. For example, samples of pig front legs can be obtained by decomposing pork pieces in advance. However, the present disclosure is not limited to the above embodiments, and the required meat samples can be selected according to actual needs, and a plurality of meat samples used for training may comprise only one sample type, or may comprise more than two sample types.

Furthermore, the prepared meat samples need to be as diverse as possible and cover all possible situations as far as possible. For example, the weight of a meat sample should cover as much as possible from the smallest weight to the largest weight, the size should cover as much as possible from the longest to the shortest, and the percentage of each component of the meat sample (such as muscle, fat and bone) should cover as much as possible from the smallest percentage to the largest percentage, and so on. Meanwhile, if conditions permit, the same meat sample should preferably be scanned in multiple orientations to collect as many scanned image data as possible.

At step S202, dual-energy X-ray scanning may be performed on the meat sample to obtain scanned image data 50 of the meat sample.

At step S203, the scanned image data 50 of the meat sample can be calibrated to unify the scanned image data under the reference imaging standard, thereby obtaining the calibrated scanned image data 50C of the meat sample. As described above with reference to step S102, the purpose of calibration to the same reference imaging standard is to eliminate the imaging standard difference between different dual-energy X-ray imaging devices. This process enables the calibrated scanned image data to be regarded as the scanning data from a single dual-energy X-ray imaging device, thereby maintaining the same imaging standard. And in some cases, even if only one dual-energy X-ray imaging device is used, it is possible to perform the calibration process in order to obtain more accurate and reliable detection results.

In this way, the model training inaccuracy caused by the differences between different dual-energy X-ray imaging devices can be reduced, thereby reducing the subsequent calculation inaccuracy. At step S202, since a plurality of meat samples are involved, it is possible to involve a plurality of different dual-energy X-ray imaging devices. In order to ensure that the meat composition calculation model 100 is trained with scanning data under a unified imaging standard, it is necessary to set a reference imaging standard and calibrate the scanned image data 50 of a plurality of meat samples according to the set reference imaging standard to obtain calibrated scanned image data 50C. Thus, the trained meat composition calculation model 100L is trained based on data under the same imaging standard, therefore the trained meat composition calculation model 100L corresponds to the imaging standard.

It should be noted that, similar to step S102, in some cases, step S203 may be performed after step S204. That is, after the conversion step, the calibration process described above can be performed on the converted image conversion data 60 of the meat sample, to achieve unification under the reference imaging standard.

At step S204, the expression form of the calibrated scanned image data 50C can be converted to obtain the image conversion data 60 of the meat sample. As described with reference to step S103, the types of data used and their corresponding characteristics can be enriched by converting the expression forms of scanned image data and obtaining image conversion data in one or more expression forms. As an example, the calibrated scanned image data 50C may be converted into one or more expression forms, and thus one or more image conversion data 60 corresponding to the one or more expression forms may be obtained. This makes it possible to train the meat composition calculation model 100 for each image conversion data 60 in the subsequent process, thereby yielding one or more trained models 100L for calculating meat composition. Each trained meat composition calculation model 100L corresponds to a respective type of image conversion data 60.

For example, the image conversion data 60 may be dual-energy format data, gray scale format data, RGB format data, atomic number format data or various base material formats data. Take gray scale data and RGB data as examples, if the models are trained with these two kinds of image conversion data 60 respectively, two models can be obtained, namely, a trained meat composition calculation model 100L based on gray-scale data and a trained meat composition calculation model 100L based on RGB data. In other words, when using these two models, it is necessary to use the corresponding form of data as input for calculation. For example, using the trained meat composition calculation model 100L based on the data in the gray scale format, the image conversion data 60 in the gray scale format is needed.

In this way, models suitable for different data types can be obtained. Because the structural characteristics of different parts of meat may lead to different calculation accuracy and matching for models with different data types, the model with the best performance can be selected from the trained models according to different parts to be tested for subsequent meat composition calculation, thus ensuring the accuracy and reliability of calculation. Therefore, the flexibility of the use of the model is increased by converting into multiple data forms.

At step S205, the meat sample can be measured with high precision to obtain the true values of the meat composition 300 of the meat samples. In this context, the "true values of meat composition" can represent the data that can make the meat composition calculation model realize the calculation of meat composition with the required accuracy. That is, when the true values of meat composition are used, a desired calculation result can be obtained. Therefore, according to the embodiment of the present disclosure, the "true values of meat composition" can be used as reference data for training the meat composition calculation model 100. In other words, the meat composition calculation model 100 can be trained with the true values of the meat composition 300, so that the meat composition information 200 calculated by the trained meat composition calculation model 100L has the same accuracy and reliability as the true values of the meat composition 300.

As an example, a high-precision measurement may comprise a measurement using manual cutting. Measurement using manual cutting may comprise cutting and segmentation measurement of the meat samples to obtain the true values of the meat composition 300.

As another example, a high-precision imaging device can be used to obtain the true values of the meat composition 300. The high-precision imaging device may be a device with a resolution higher than that of a dual-energy X-ray imaging device. For example, a high-precision imaging device can have higher performance indexes, such as spatial resolution, material resolution and so on, compared with a dual-energy X-ray imaging device. As an example, the high-precision imaging device may comprise a high-performance medical CT device.

As an example, the true values of meat composition 300 may comprise at least one of muscle weight, fat weight, bone weight, total weight, muscle weight percentage, fat weight percentage or bone weight percentage of a meat sample. However, embodiments of the present disclosure are not limited thereto.

At step S206, a mapping relationship between the scanned image data 50 and the true value of meat composition 300 can be established for each of multiple meat samples. In this way, the correspondence between the scanned image data 50 of each meat sample and the true value of meat composition 300 can be realized, so that the model can be trained based on the scanned image data 50 and the true value of meat composition 300 of the same meat sample, and a plurality of samples can be trained in this way.

As an example, the mapping relationship between the scanned image data 50 of multiple meat samples and the true values of meat composition 300 can be stored in the form of a mapping table or a mapping database. Therefore when training is performed, the corresponding scanned image data 50 and the true value of meat composition 300 can be selected according to the mapping relationship recorded in the mapping table for training. Further, the mapping relationship of multiple meat samples may also comprise the mapping of the true values of meat composition 300 with the calibrated scanned image data 50C and the converted image conversion data 60. However, the embodiment of the present disclosure is not limited to this, provided that the calculated value of the meat composition calculation model 100 based on the scanned image data 50 of a meat sample can correspond to the true value of meat composition 300 of the meat sample.

At step S207, a calculation value of meat composition 400 can be calculated based on the image conversion data 60 of the meat sample, and the meat composition calculation model 100 can be trained based on the calculation value of meat composition 400 and the true value of meat composition 300 to obtain the trained meat composition calculation model 100L.

Fig. 3 shows an example of a flowchart of training the meat composition calculation model 100 according to an embodiment of the present disclosure.

As shown in Fig. 3, the meat composition calculation model 100 can calculate the calculation value of meat composition 400 for the first time according to the image conversion data 60. Here, the meat composition calculation model 100 is an untrained model, so that the calculation value of meat composition 400 calculated for the first time cannot meet the expected effect (such as accuracy). In this case, it is necessary to iteratively train the meat composition calculation model 100 according to the true value data. By modifying the model parameters of the meat composition calculation model 100 in each iteration, the calculated results can gradually approach the true value data. Finally, the model parameters of the meat composition calculation model 100 can be modified to calculate the desired calculation value of meat composition, that is, the meat composition information 200, based on the image conversion data 60. It must be pointed out that the judgment condition in the current example is only an example, and the present disclosure may not be limited thereto.

Therefore, as shown in Fig. 3, the meat composition calculation model 100 can calculate the difference between the first calculated calculation value of meat composition 400 and the true value of meat composition 300(denoted as |400- 300| in Fig. 3), and then compare the difference with the preset reference data FD to judge whether the difference is less than or equal to the reference data FD (denoted as |400- 300|≤FD? in Fig. 3). In a case where the difference is not less than or equal to (i.e., greater than) the reference data FD (NO in Fig. 3), the meat composition calculation model 100 may update the model parameters and calculate the calculation value of meat composition 400 again (i.e., for the second time) using the updated meat composition calculation model 100. Then, the difference between the calculated value of the meat composition 400 calculated for the second time and the true value of meat composition 300 is calculated, and the above comparison process is repeated. That is, the second difference is compared with the reference data FD to judge whether the difference is less than or equal to the reference data FD. In a case where the difference is still not less than or equal to (that is, greater than) the reference data FD ("No" in Fig. 3), the above-mentioned parameter updating and calculation process are repeated until the difference is less than or equal to the reference data FD. However, in a case where the second difference is less than or equal to the reference data FD (Yes in Fig. 3), it can be determined that the training of the meat composition calculation model 100 is completed, and the meat composition calculation model 100 at this time is determined as the trained meat composition calculation model 100L.

Optionally, the training process may also comprise a verification process. As an example, a part of multiple meat samples can be selected, for example, a few samples can be used as meat samples for verification. When the training of the meat composition calculation model 100 is determined to be completed as shown in Fig. 3, the image conversion data 60 of the meat samples for verification can be fed into the meat composition calculation model 100 at this time, and verification value of meat composition can be calculated. Then, the verification value of meat composition is compared with the true value of meat composition 300. For example, compare the difference between the verification value of meat composition and the true value of meat composition with a preset threshold range. If the difference is within the threshold range, the meat composition calculation model 100 at this time passes the verification, thereby outputting the meat composition calculation model 100 as a trained meat composition calculation model 100L. If the difference is outside the threshold range, the validation of the meat composition calculation model 100 at this time fails, and the training process as shown in Fig. 3 is reexecuted. In some cases, the passing rate can be set for a plurality of meat samples for verification, so as to finally determine whether the meat composition calculation model 100 is successfully trained.

In this way, through the training of the model, a meat composition calculation model with output close to the true value level can be obtained. When the trained model is applied to the network model solving process as described with reference to step S106, the meat composition information 200 can be calculated quickly and accurately in an automated manner.

The meat composition calculation model 100 may be a regression network model.

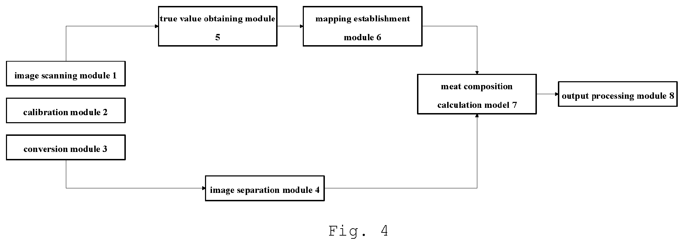

Fig. 4 shows an example of a system 3000 for calculating meat composition according to an embodiment of the present disclosure.

As shown in Fig. 4, the system 3000 for calculating meat composition can comprise an image scanning module 1, a calibration module 2, a conversion module 3, an image separation module 4, a true value obtaining module 5, a mapping establishment module 6, a meat composition calculation model 7 and an output processing module 8.

According to an embodiment of the present disclosure, the image scanning module 1 may be configured to perform dual-energy X-ray scanning on a meat piece or meat samples to obtain scanned image data of the meat piece or the meat samples. The conversion module 2 may be configured to convert the expression form of the scanned image data to obtain image conversion data of the meat piece or the meat samples. The true value obtaining module 5 can be configured to measure the meat samples with high precision to obtain the true values of the meat composition of the meat samples.

Further, the meat composition calculation model 7 can be trained based on the image conversion data of multiple meat samples and the true values of the meat composition to obtain a trained meat composition calculation model. The trained meat composition calculation model can be used to calculate the meat composition information of the meat piece based on the image conversion data of the meat piece.

In an embodiment, the calibration module 2 may be configured to calibrate the scanned image data before converting the scanned image data of meat pieces or meat samples into image conversion data, to unify the scanned image data under the reference imaging standard.

In an embodiment, the image separating module 4 may be configured to perform image processing on the scanned image data of the meat piece to separate at least one area to be detected from the scanned image data of the meat piece, so that the system 300 obtains the image conversion data of the meat piece corresponding to the at least one area to be detected.

In an embodiment, the mapping establishment module 6 may be configured to establish a mapping relationship between scanned image data of meat sample and the true value of meat composition for each meat sample. This enables the meat composition calculation model 7 to be trained by calculating the difference between the calculated value and the true value of meat composition of the same meat sample based on the mapping relationship of multiple meat samples, and updating the model parameters of the meat composition calculation model 7 based on the difference. In some cases, the mapping establishment module 6 may be integrated into the same module as the meat composition calculation model 7, or may be a module separate from the meat composition calculation model 7.

In an embodiment, the output processing module 8 may be configured to perform output processing on the calculated meat composition information to output at least one of muscle weight, fat weight, bone weight, total weight, muscle weight percentage, fat weight percentage or bone weight percentage to the outside.

In the method and system for calculating meat composition according to the embodiment of the present disclosure, a deep learning method is employed to learn the relationship between scanned image data and meat composition information based on a large number of sample data, thereby obtaining a trained meat composition calculation model. Thus, the meat composition information can be directly calculated by using the trained meat composition calculation model. Therefore, the method according to the embodiment of the present disclosure can avoid the problems of complicated formulation and preservation of calibration parts in the traditional technology, and has reliable calculation accuracy. In addition, the meat composition calculation method and system according to the embodiment of the present disclosure can be directly used in a dual-energy X-ray-based scanning system, thereby quickly and conveniently upgrading the functional modules of the current system.

It should be understood that steps can be reordered, added or deleted using the various forms of flow shown above. For example, the steps described in this disclosure can be executed in parallel, sequentially or in a different order, as long as the desired results of the technical scheme disclosed in this disclosure can be achieved. There is no restriction here.

The above specific embodiments do not limit the protection scope of this disclosure. It should be understood by those skilled in the art that various modifications, combinations, subcombinations and substitutions can be made according to design requirements and other factors. Any modification, equivalent substitution and improvement made within the spirit and principles of this disclosure should be included in the protection scope of this disclosure.

## Claims

1. A method for calculating meat composition, comprising:
performing dual-energy X-ray scanning on a meat piece to obtain scanned image data of the meat piece;
converting an expression form of the scanned image data to obtain image conversion data of the meat piece;
training a meat composition calculation model based on a plurality of meat samples to obtain the trained meat composition calculation model; and
calculating, based on the image conversion data, meat composition information of the meat piece using the trained meat composition calculation model.

2. The method for calculating meat composition according to claim 1, further comprising:
converting the scanned image data of the meat piece into one or more expression forms to obtain one or more image conversion data of the meat piece corresponding to the one or more expression forms.

3. The method for calculating meat composition according to claim 2, wherein the expression forms comprise a dual-energy form, a gray scale form, an RGB form, an atomic number form and various base material forms.

4. The method for calculating meat composition according to claim 1, further comprising:
calibrating the scanned image data of the meat piece or the image conversion data of the meat piece to unify the scanned image data or the image conversion data under an imaging standard corresponding to the trained meat composition calculation model.

5. The method for calculating meat composition according to claim 1, further comprising:
performing image processing on the scanned image data of the meat piece to separate at least one area to be detected from the scanned image data of the meat piece; and
inputting image conversion data of the meat piece corresponding to the at least one area to be detected into the trained meat composition calculation model to calculate meat composition information of the at least one area to be detected.

6. The method for calculating meat composition according to claim 1, wherein the training comprises:
performing the dual-energy X-ray scanning on the meat samples to obtain scanned image data of the meat samples, and converting an expression form of the scanned image data of the meat samples to obtain image conversion data of the meat samples;
carrying out a high-precision measurement on the meat samples to obtain true values of the meat composition of the meat samples; and
training the meat composition calculation model based on the image conversion data of the meat samples and the true values of the meat composition to obtain the trained meat composition calculation model.

7. The method for calculating meat composition according to claim 6, wherein the training further comprises:
calibrating the scanned image data or the image conversion data of the plurality of meat samples to unify the scanned image data or the image conversion data under a reference imaging standard.

8. The method for calculating meat composition according to claim 6, wherein the training further comprises:
converting the scanned image data of the meat samples into one or more expression forms to obtain image conversion data of one or more meat samples corresponding to the one or more expression forms; and
obtaining a plurality of trained meat composition calculation models based on image conversion data of the plurality of meat samples.

9. The method for calculating meat composition according to claim 6, wherein the training further comprises:
for each of the plurality of meat samples, establishing a mapping relationship between the scanned image data of each meat sample and a true value of meat composition; and
training the meat composition calculation model by calculating a difference between a calculation value of the meat composition and the true value of the meat composition of a same meat sample, based on the mapping relationship of the plurality of meat samples, and updating model parameters of the meat composition calculation model based on the difference.

10. The method for calculating meat composition according to any one of claims 6-9, wherein the carrying out the high-precision measurement comprises:
obtaining the true values of the meat composition of the meat samples by using a high-precision imaging device; and/or
measuring by cutting the meat samples manually to obtain the true values of the meat composition of the meat samples.

11. The method for calculating meat composition according to any one of claims 6-9, wherein the true value of the meat composition comprises at least one of muscle weight, fat weight, bone weight, total weight, muscle weight percentage, fat weight percentage or bone weight percentage of the meat samples.

12. The method for calculating meat composition according to any one of claims 1-9, wherein the calculated meat composition information comprises at least one of muscle weight, fat weight, bone weight, total weight, muscle weight percentage, fat weight percentage or bone weight percentage; and
the method further comprises: performing output processing on the calculated meat composition information to output at least one of muscle weight, fat weight, bone weight, total weight, muscle weight percentage, fat weight percentage or bone weight percentage to the outside.

13. A system for calculating meat composition, which executes the method according to any one of claims 1-12, comprising:
an image scanning module configured to perform dual-energy X-ray scanning on a meat piece or meat samples to obtain scanned image data of the meat piece or the meat samples;
a conversion module configured to convert an expression form of the scanned image data to obtain image conversion data of the meat piece or the meat samples;
a true value obtaining module configured to perform a high-precision measurement on the meat samples to obtain true values of the meat composition of the meat samples; and
a meat composition calculation model that is trained based on the image conversion data of the plurality of meat samples and the true values of the meat composition to obtain a trained meat composition calculation model, the trained meat composition calculation model being used to calculate meat composition information of the meat piece based on the image conversion data of the meat piece.

14. The system according to claim 13, further comprising:
a calibration module configured to calibrate the scanned image data or the image conversion data to unify the scanned image data or the image conversion data under a reference imaging standard.

15. The system according to claim 13, further comprising:
an image separating module configured to perform image processing on the scanned image data of the meat piece to separate at least one area to be detected from the scanned image data of the meat piece, to facilitate the system to obtain image conversion data of the meat piece corresponding to the at least one area to be detected.

16. The system according to claim 13, further comprising:
a mapping establishing module configured to establish a mapping relationship between the scanned image data of the meat sample and the true value of the meat composition for each of the meat samples.

17. The system according to any one of claims 13-16, further comprising:
an output processing module configured to perform output processing on the calculated meat composition information to output at least one of muscle weight, fat weight, bone weight, total weight, muscle weight percentage, fat weight percentage or bone weight percentage to the outside.
